# EUROPEAN PATENT APPLICATION

(11) **EP 2 527 615 A1**
(43) Date of publication of application: **28.11.2012**
(21) Application number: 11734595.9
(22) Date of filing: 17.01.2011
(51) Int. Cl.: F02B 37/18, F01N 5/02, F02B 37/10, F02D 13/02, F02D 23/00, F02D 23/02, F02D 41/04, F02D 45/00

(54) **ENGINE EXHAUST ENERGY RECOVERY DEVICE, SHIP PROVIDED THEREWITH, AND POWER GENERATION PLANT PROVIDED WITH SAID ENGINE EXHAUST ENERGY RECOVERY DEVICE**

(30) Priority: 21.01.2010 JP 2010011158
(71) Applicant: Mitsubishi Heavy Industries, Ltd., Tokyo 108-8215 (JP)
(72) Inventor: MURATA, Satoru, Tokyo 108-8215 (JP); HIGUCHI, Jun, Tokyo 108-8215 (JP)
(74) Representative: HOFFMANN EITLE
(86) International application number: PCT/JP2011/050623
(87) International publication number: WO 2011/089989

(57) **Abstract**

An object is to provide an engine-exhaust-gas energy recovery apparatus that can set the fuel consumption rate of an engine to a predetermined value or lower in response to various loads and rotation speeds of the engine, and that can effectively utilize exhaust gas discharged from the engine. Provided are a hybrid turbocharger (3) having a turbine unit (3a) that is supplied with exhaust gas discharged from an engine (2), a compressor unit (3b) that pressure-feeds scavenging-air pressure to the engine (2), and a generator/motor unit (3d) that generates electricity when the turbine unit (3a) is driven; a bypass channel (L2) that allows the exhaust gas supplied toward the hybrid turbocharger (3) to bypass the hybrid turbocharger (3); an engine-load detecting part; an engine-rotation-speed detecting part; a scavenging-air-pressure detecting part; and a control device having a database for calculating a scavenging-air pressure, at which the fuel consumption rate of the engine (2) becomes lower than or equal to a predetermined value, from the detection values of the respective detecting parts. The control device controls an exhaust-gas bypass control valve (V1) so as to control the scavenging-air pressure of the engine (2).

## Description

### {Technical Field}

The present invention relates to an engine-exhaust-gas energy recovery apparatus that recovers exhaust energy of exhaust gas discharged from an engine as power, to a ship equipped with the same, and to a power plant equipped with the same.

### {Background Art}

Known engine-exhaust-gas energy recovery apparatuses that recover exhaust energy included in exhaust gas discharged from an engine as power include a turbocharger and a power turbine (for example, see PTL 1).

### {Citation List}

### {Patent Literature}

{PTL 1}
   Japanese Unexamined Patent Application, Publication No. Sho 63-186916

### {Summary of Invention}

### {Technical Problem}

However, in the invention discussed in PTL 1, when the output from the power turbine is reduced during a high-load operation mode of the engine, the exhaust gas used for driving the power turbine is supplied to an exhaust turbine of the turbocharger. Therefore, the driving force and the rotation speed of the exhaust turbine of the turbocharger increase, resulting in an increase in the rotation speed of a compressor that is driven by the exhaust turbine. As a result, the pressure of compressed air to be supplied to the engine from the turbocharger, that is, scavenging-air pressure, exceeds an allowable pressure. On the other hand, for safe operation of the engine, there are limits set on the engine to prevent the scavenging-air pressure from exceeding the allowable pressure. For this reason, there is a problem in that supplying highpressure scavenging air to the engine does not lead to an improvement in thermal efficiency.

In view of the circumstances described above, it is an object of the present invention to provide an engine-exhaust-gas energy recovery apparatus that can set the fuel consumption rate of an engine to a predetermined value or lower in response to various loads and rotation speeds of the engine, and that can effectively utilize exhaust gas discharged from the engine, as well as providing a ship equipped with the same and a power plant equipped with the same.

### {Solution to Problem}

In order to solve the aforementioned problem, an engine-exhaust-gas energy recovery apparatus according to the present invention, a ship equipped with the same, and a power plant equipped with the same employ the following solutions.
Specifically, an engine-exhaust-gas energy recovery apparatus according to a first aspect of the present invention includes a hybrid turbocharger having a turbine unit that is driven by exhaust gas discharged from an engine, a compressor unit that is driven by the turbine unit so as to pressure-feed outside air to the engine, and a generator/motor unit that generates electricity when the turbine unit is driven and that also drives the turbine unit by being supplied with electric power; a bypass channel that allows the exhaust gas supplied toward the hybrid turbocharger to bypass the hybrid turbocharger; an exhaust-gas bypass control valve that is provided in the bypass channel and that controls the flow rate of the exhaust gas guided toward the hybrid turbocharger; an engine-load detecting part for detecting a load on the engine; an engine-rotation-speed detecting part for detecting a rotation speed of the engine; a scavenging-air-pressure detecting part for detecting a scavenging-air pressure of the engine; and a control device that has a database for calculating a target scavenging-air pressure at which a fuel consumption rate of the engine becomes lower than or equal to a predetermined value, the target scavenging-air pressure being calculated from the load and the rotation speed respectively detected by the engine-load detecting part and the engine-rotation-speed detecting part. The control device controls the exhaust-gas bypass control valve so as to achieve the target scavenging-air pressure.

The bypass channel that allows the exhaust air guided toward the hybrid turbocharger to bypass the hybrid turbocharger is provided with the exhaust-gas bypass control valve. When the degree of opening of the exhaust-gas bypass control valve is reduced, the flow rate of exhaust gas guided toward the hybrid turbocharger increases. Therefore, the flow rate of exhaust gas guided toward the turbine unit of the hybrid turbocharger increases. This increase in the flow rate of exhaust gas guided toward the turbine unit causes an increase in the rotational driving force of the turbine unit. When the rotational driving force of the turbine unit increases, the rotation speed of the compressor unit increases, resulting in an increase in the pressure of air to be compressed. Scavenging air obtained as a result of compressing the air in the compressor unit is guided to the engine. The scavenging-air pressure of the engine is determined on the basis of the pressure of scavenging air supplied to the engine from the compressor unit of the hybrid turbocharger. The fuel consumption rate of the engine is affected by the scavenging-air pressure, the exhaust-valve, closing timing, the cylinder pressure, the engine rotation speed, the engine load, and the fuel injection timing.

In the first aspect, the exhaust-gas bypass control valve is controlled by the control device. Thus, the flow rate of exhaust gas guided toward the hybrid turbocharger can be controlled. Moreover, the control device uses the database to calculate the target scavenging-air pressure from the load detected by the engine-load detecting part and the rotation speed detected by the engine-rotation-speed detecting part. Thus, the pressure of scavenging air guided to the engine from the compressor unit of the hybrid turbocharger, that is, the scavenging-air pressure, can be controlled toward the target scavenging-air pressure. Consequently, the fuel consumption rate of the engine can be suppressed to the predetermined value or lower by controlling the exhaust-gas bypass control valve, thereby reducing the operating costs of the engine.

The fuel consumption rate of the engine is affected by the fuel combustion state. The fuel combustion state varies depending on the engine rotation speed, the scavenging-air pressure, the properties of the fuel, the ignition timing of the fuel, and the injection state of the fuel. In the first aspect, the scavenging-air pressure is controlled by controlling the exhaust-gas bypass control valve. Therefore, the fuel combustion state in the engine can be improved.

Furthermore, because the hybrid turbocharger that generates electricity using exhaust gas is provided, when the engine starts to operate, the hybrid turbocharger is driven by electric power supplied to the generator/motor unit so that air can be supplied to the engine.
Moreover, when the engine is running, the flow rate of exhaust gas guided toward the hybrid turbocharger can be changed by controlling the exhaust-gas bypass control valve. Consequently, by controlling the exhaust-gas bypass control valve, the amount of electricity to be generated in the hybrid turbocharger can be controlled in accordance with the amount of electricity required.

The engine-exhaust-gas energy recovery apparatus according to the first aspect may further include a heat exchanger that performs heat exchange between the exhaust gas guided from the hybrid turbocharger and the exhaust gas guided from the bypass channel.

The exhaust gas whose flow rate is controlled by the exhaust-gas bypass control valve is guided to the hybrid turbocharger. Moreover, because the exhaust gas that has traveled through the bypass channel and the hybrid turbocharger is guided toward the heat exchanger, when the exhaust-gas bypass control valve is opened so as to reduce the amount of electricity generated in the hybrid turbocharger, a large amount of high-temperature exhaust gas guided from the bypass channel is supplied to the heat exchanger. Consequently, by controlling the exhaust-gas bypass control valve, the amount of electricity to be generated in the hybrid turbocharger can be controlled, while thermal energy of the exhaust gas can be effectively recovered.

In the engine-exhaust-gas energy recovery apparatus according to the first aspect, the control device may include a map or an arithmetic equation for calculating a target fuel injection timing at which the fuel consumption rate of the engine becomes lower than or equal to the predetermined value, the target fuel injection timing being calculated from the load and the rotation speed respectively detected by the engine-load detecting part and the engine-rotation-speed detecting part. The control device may control the fuel injection timing by using the map or the arithmetic equation.

The control device uses the map or the arithmetic equation to calculate the target fuel injection timing from the load and the rotation speed, so as to control the fuel injection timing. Therefore, the scavenging-air pressure is controlled so that the fuel combustion state within the cylinders is improved, thereby allowing for increased thermal efficiency. Consequently, by controlling the exhaust-gas bypass control valve and the fuel injection timing, the fuel consumption rate of the engine can be set even closer to the predetermined value or lower.

In the engine-exhaust-gas energy recovery apparatus according to the first aspect, the control device may include a map or an arithmetic equation for calculating a target exhaust-valve closing timing at which the fuel consumption rate of the engine becomes lower than or equal to the predetermined value, the target exhaust-valve closing timing being calculated from the load and the rotation speed respectively detected by the engine-load detecting part and the engine-rotation-speed detecting part. The control device may control the exhaust-valve closing timing by using the map or the arithmetic equation.

A cylinder pressure is determined from the scavenging-air pressure and the exhaust-valve closing timing. Thus, the control device in the first aspect uses the map or the arithmetic equation to calculate the target exhaust-valve closing timing from the load and the rotation speed, so as to control the exhaust-valve closing timing. Therefore, the cylinder pressure can be controlled so that the fuel combustion state within the cylinders is improved, thereby allowing for increased thermal efficiency. Consequently, by controlling the exhaust-gas bypass control valve and the exhaust-valve closing timing, the fuel consumption rate of the engine can be set even closer to the predetermined value or lower.

Furthermore, if the exhaust-valve closing timing is retarded, the work of compression is reduced when the pistons move upward. Therefore, the temperature of combustion gas at the top dead center within each cylinder decreases. Consequently, by controlling the exhaust-valve closing timing, the generation of NOx can be suppressed, thereby achieving reduced environmental load.

In the engine-exhaust-gas energy recovery apparatus according to the first aspect, the engine may include a working-oil accumulator that accumulates working oil that drives a fuel pump, or a fuel accumulator that accumulates fuel oil to be supplied to a common-rail fuel injection valve. The control device may include a map or an arithmetic equation for calculating a target working-oil accumulation pressure or a target fuel accumulation pressure at which the fuel consumption rate of the engine becomes lower than or equal to the predetermined value, the target working-oil accumulation pressure or the target fuel accumulation pressure being calculated from the load and the rotation speed respectively detected by the engine-load detecting part and the engine-rotation-speed detecting part. The control device may control the working-oil accumulation pressure or the fuel accumulation pressure by using the map or the arithmetic equation.

The accumulation pressure of working oil that drives the fuel pump or the accumulation pressure of fuel oil to be supplied to the common-rail fuel injection valve affects the fuel injection timing and the fuel injection pressure. Thus, the control device in the first aspect uses the map or the arithmetic equation to calculate the target working-oil accumulation pressure or the target fuel-oil accumulation pressure from the load and the rotation speed. Moreover, the control device controls the working-oil accumulation pressure or the fuel-oil accumulation pressure. Therefore, by controlling the working-oil accumulation pressure or the fusel-oil accumulation pressure, the fuel injection timing and the fuel injection pressure can be controlled. Thus, the control of the exhaust-gas bypass control valve and the fuel combustion state within the cylinders can be improved, thereby allowing for increased thermal efficiency. Consequently, the fuel consumption rate of the engine can be set even closer to the predetermined value or lower.

In the engine-exhaust-gas energy recovery apparatus according to the first aspect, the control device may calculate a target degree of opening, at which the fuel consumption rate of the engine becomes lower than or equal to the predetermined value, of the exhaust-gas bypass control valve, the target degree of opening being calculated on the basis of a signal from an exhaust-gas-bypass-control-valve degree-of-opening detecting part for detecting the degree of opening of the exhaust-gas bypass control valve. The control device may perform feedback control so that the exhaust-gas bypass control valve is set to the target degree of opening.

The feedback control is performed by successively detecting the degree of opening of the exhaust-gas bypass control valve using the exhaust-gas-bypass-control-valve degree-of-opening detecting part. Therefore, a deviation, caused by degradation over time, occurring between the actual degree of opening detected by the exhaust-gas-bypass-control-valve degree-of-opening detecting part and the target degree of opening can be corrected. Consequently, the fuel consumption rate of the engine can be maintained at the predetermined value or lower.

In the engine-exhaust-gas energy recovery apparatus according to the first aspect, the control device may calculate a cylinder compression pressure Pcomp and a maximum cylinder pressure Pmax from a cylinder pressure detected by a cylinder-pressure detecting part and use a map or an arithmetic equation to calculate a target cylinder compression pressure PcompO and a target maximum cylinder pressure PmaxO, at which the fuel consumption rate of the engine becomes lower than or equal to the predetermined value, relative to the detected load and the detected rotation speed. The control device may control the fuel injection timing and the exhaust-valve closing timing so that the maximum cylinder pressure Pmax becomes equal to the target maximum cylinder pressure PmaxO and the cylinder compression pressure Pcomp becomes equal to the target cylinder compression pressure PcompO.

One of conditions for setting the fuel consumption rate of the engine to the predetermined value or lower is affected by the fuel combustion state. Witch regard to the fuel combustion state, the fuel ignition timing and the conditions for making the fuel into particulates change depending on the engine rotation speed, the scavenging-air pressure, and the fuel properties (such as a cetane number, viscosity, and mixed impurities). The fuel combustion state can be ascertained from the cylinder compression pressure Pcomp and the maximum cylinder pressure Pmax determined from the detected cylinder pressure.
Thus, the control device in the first aspect uses the map or the arithmetic equation to obtain the target cylinder compression pressure PcompO and the target maximum cylinder pressure PmaxO on the basis of the cylinder pressure detected by the cylinder-pressure detecting part. Moreover, the control device controls the exhaust-gas bypass control valve, the fuel injection timing, and the exhaust-valve closing timing. Therefore, by controlling the exhaust-gas bypass control valve, the fuel injection timing, and the exhaust-valve closing timing, the cylinder compression pressure Pcomp and the maximum cylinder pressure Pmax can be set equal to the target cylinder compression pressure PcompO and the target maximum cylinder pressure PmaxO, respectively, so that the fuel combustion state within the cylinders is improved, thereby allowing for increased thermal efficiency. Consequently, the fuel consumption rate of the engine can be set to the predetermined value P or lower even when the properties of the fuel change.

An engine-exhaust-gas energy recovery apparatus according to a second aspect of the present invention includes a hybrid turbocharger having a turbine unit that is driven by exhaust gas discharged from an engine, a compressor unit that is driven by the turbine unit so as to pressure-feed outside air to the engine, and a generator/motor unit that generates electricity when the turbine unit is driven and that also drives the turbine unit by being supplied with electric power; a bypass channel that allows the exhaust gas supplied toward the hybrid turbocharger to bypass the hybrid turbocharger; an exhaust-gas bypass control valve that is provided in the bypass channel and that controls the flow rate of the exhaust gas guided toward the hybrid turbocharger; an engine-load detecting part for detecting a load on the engine; an engine-rotation-speed detecting part for detecting a rotation speed of the engine; a scavenging-air-pressure detecting part for detecting a scavenging-air pressure of the engine; a cylinder-pressure detecting part for detecting a cylinder pressure of the engine; and a control device that has a database for calculating a target cylinder compression pressure PcompO and a target maximum cylinder pressure PmaxO at which a fuel consumption rate of the engine becomes lower than or equal to a predetermined value, the target cylinder compression pressure PcompO and the target maximum cylinder pressure PmaxO being calculated from the load and the rotation speed respectively detected by the engine-load detecting part and the engine-rotation-speed detecting part. The control device controls an exhaust-valve closing timing so as to achieve the target cylinder compression pressure PcompO, and controls a fuel injection timing so as to achieve the target maximum cylinder pressure PmaxO.

Sometimes, a deviation, caused by degradation over time, occurs between the target degree of opening and the actual degree of opening of the exhaust-gas bypass control valve, resulting in reduced scavenging-air pressure of the engine. If a seat portion of an exhaust valve in the engine wears, the cylinder compression pressure Pcomp decreases, leading to lower engine performance. Thus, in the second aspect, the target cylinder compression pressure PcompO and the target maximum cylinder pressure PmaxO are calculated from the load and the rotation speed. Furthermore, the cylinder pressure is detected so as to control the exhaust-valve closing timing and the fuel injection timing. Therefore, by controlling the exhaust-valve closing timing and the fuel injection timing, the cylinder compression pressure Pcomp and the maximum cylinder pressure Pmax can be set equal to the target cylinder compression pressure PcompO and the target maximum cylinder pressure PmaxO, respectively, so that the fuel combustion state within the cylinders can be improved, thereby allowing for increased thermal efficiency. Consequently, the fuel consumption rate of the engine can be set to the predetermined value or lower even when the properties of the fuel change.

Furthermore, the cylinder pressure is detected so as to control the exhaust-valve closing timing. Therefore, even when the exhaust-gas bypass control valve is fully closed, the exhaust-valve closing timing is controlled so that the target cylinder compression pressure PcompO can be controlled. Consequently, even when there is a problem in controlling the exhaust-gas bypass control valve, the fuel consumption rate of the engine can still be set to the predetermined value or lower.

A ship according to a third aspect of the present invention includes the engine-exhaust-gas energy recovery apparatus according to one of the above aspects.

The engine-exhaust-gas energy recovery apparatus installed in the ship allows for reduced operating costs of the engine. Therefore, the operating costs of the ship can be reduced. In addition, an environmentally friendly ship can be achieved.

A power plant according to a fourth aspect of the present invention includes the engine-exhaust-gas energy recovery apparatus according to one of the above aspects.

The engine-exhaust-gas energy recovery apparatus provided in the power plant allows for reduced operating costs of the engine. Therefore, the operating costs of the power plant can be reduced. In addition, an environmentally friendly power plant can be achieved.

### {Advantageous Effects of Invention}

In the engine-exhaust-gas energy recovery apparatus according to the present invention, the exhaust-gas bypass control valve is controlled by the control device. Thus, the flow rate of exhaust gas guided toward the hybrid turbocharger can be controlled. Moreover, the control device uses the database to calculate the target scavenging-air pressure from the load detected by the engine-load detecting part and the rotation speed detected by the engine-rotation-speed detecting part. Thus, the pressure of scavenging air guided to the engine from the compressor unit of the hybrid turbocharger, that is, the scavenging-air pressure, can be controlled toward the target scavenging-air pressure. Consequently, the fuel consumption rate of the engine can be suppressed to the predetermined value or lower by controlling the exhaust-gas bypass control valve, thereby reducing the operating costs of the engine.

The fuel consumption rate of the engine is affected by the fuel combustion state. The fuel combustion state varies depending on the rotation speed, the scavenging-air pressure, the properties of the fuel, the ignition timing of the fuel, and the injection state of the fuel. In the present invention, the scavenging-air pressure is controlled by controlling the exhaust-gas bypass control valve. Therefore, the fuel combustion state in the engine can be improved. Consequently, by controlling the exhaust-gas bypass control valve, the fuel consumption rate of the engine is improved.

Furthermore, because the hybrid turbocharger that generates electricity using exhaust gas is provided, when the engine starts to operate, the hybrid turbocharger is driven by electric power supplied to the generator/motor unit so that air can be supplied to the engine.
Moreover, when the engine is running, the flow rate of exhaust gas guided toward the hybrid turbocharger can be changed by controlling the exhaust-gas bypass control valve. Consequently, by controlling the exhaust-gas bypass control valve, the amount of electricity to be generated in the hybrid turbocharger can be controlled in accordance with the amount of electricity required.

### {Brief Description of Drawings}

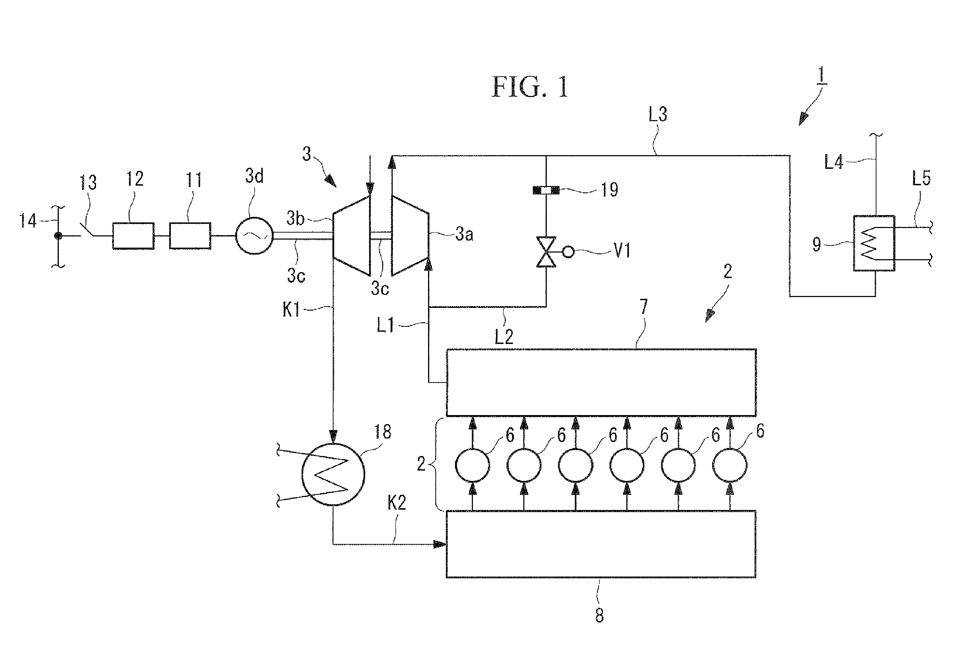

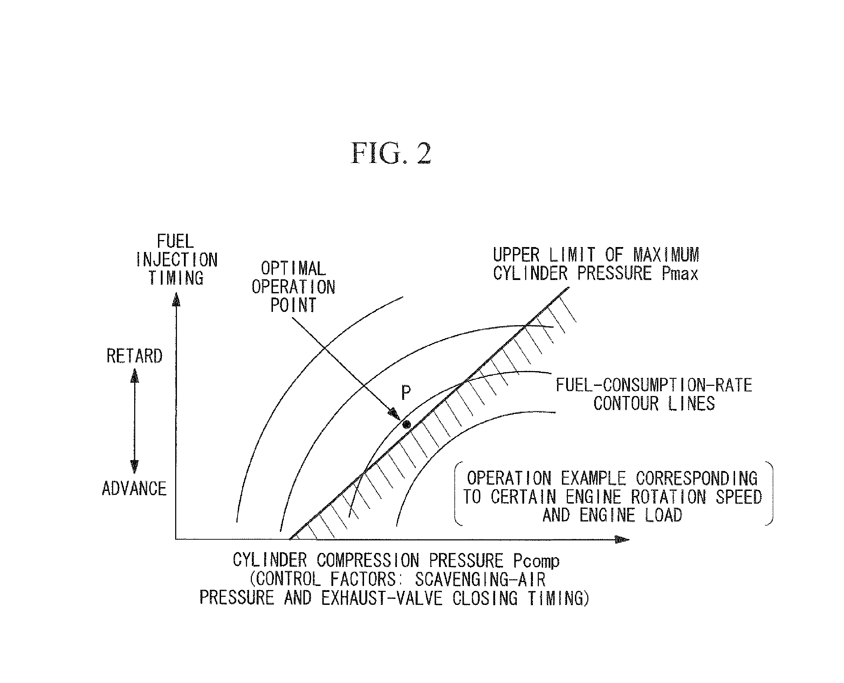

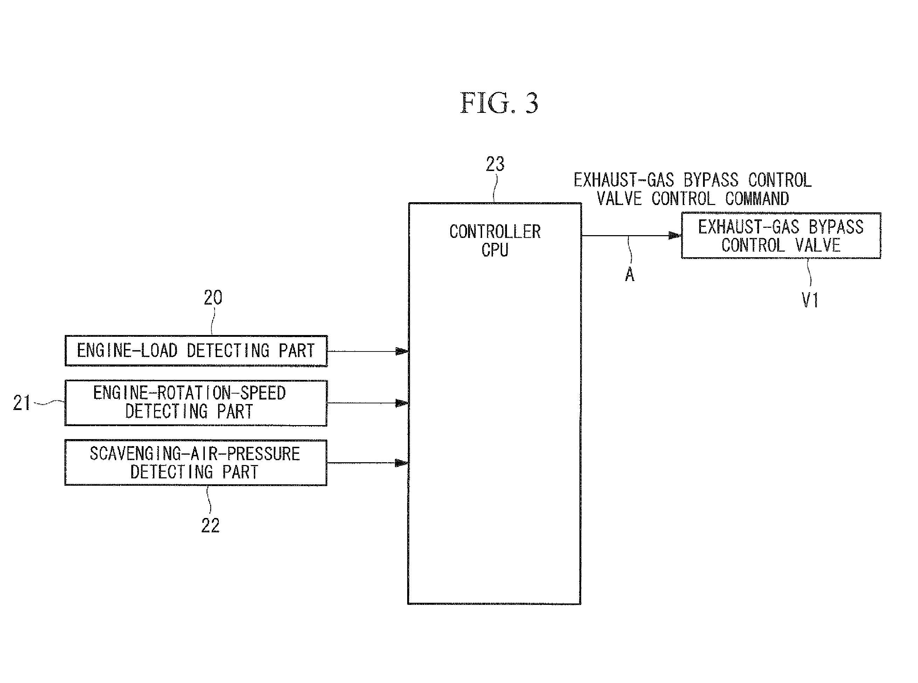

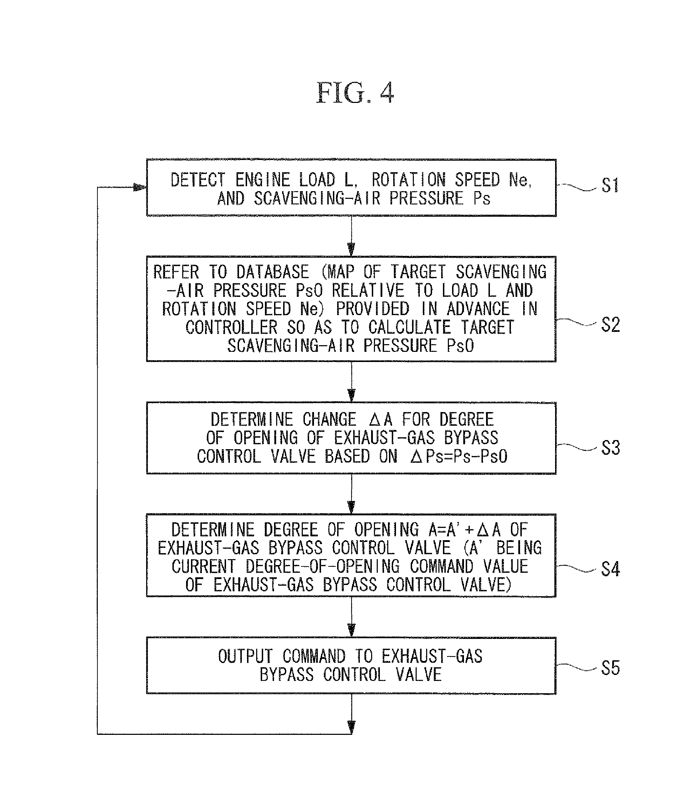

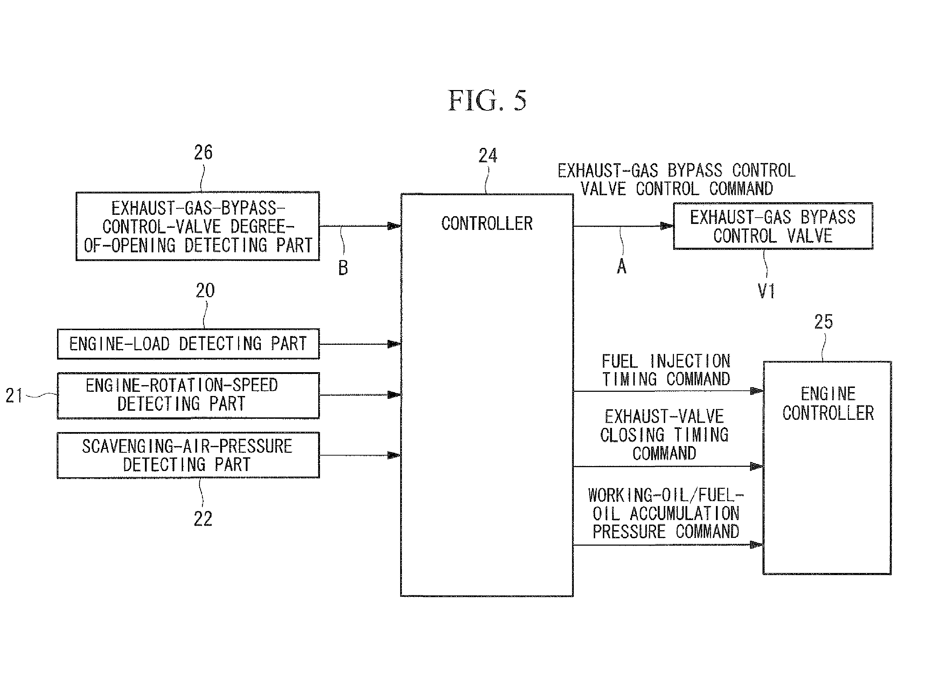

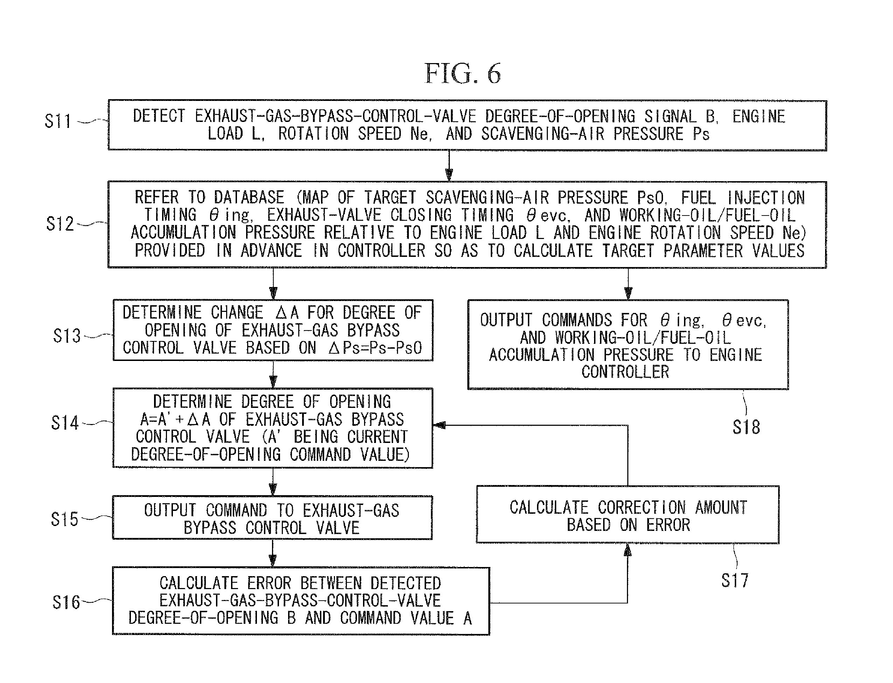

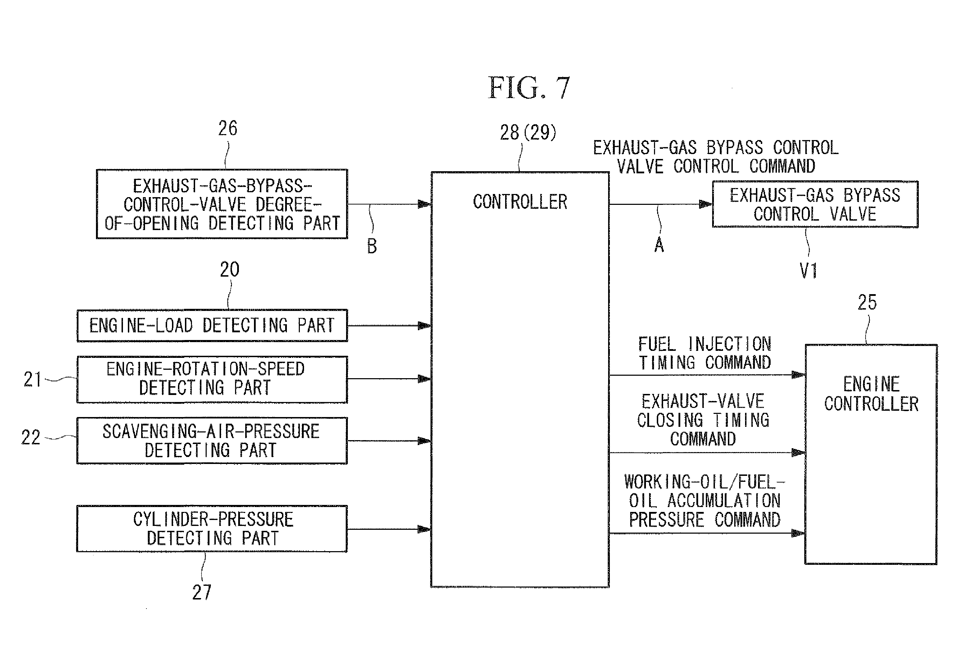

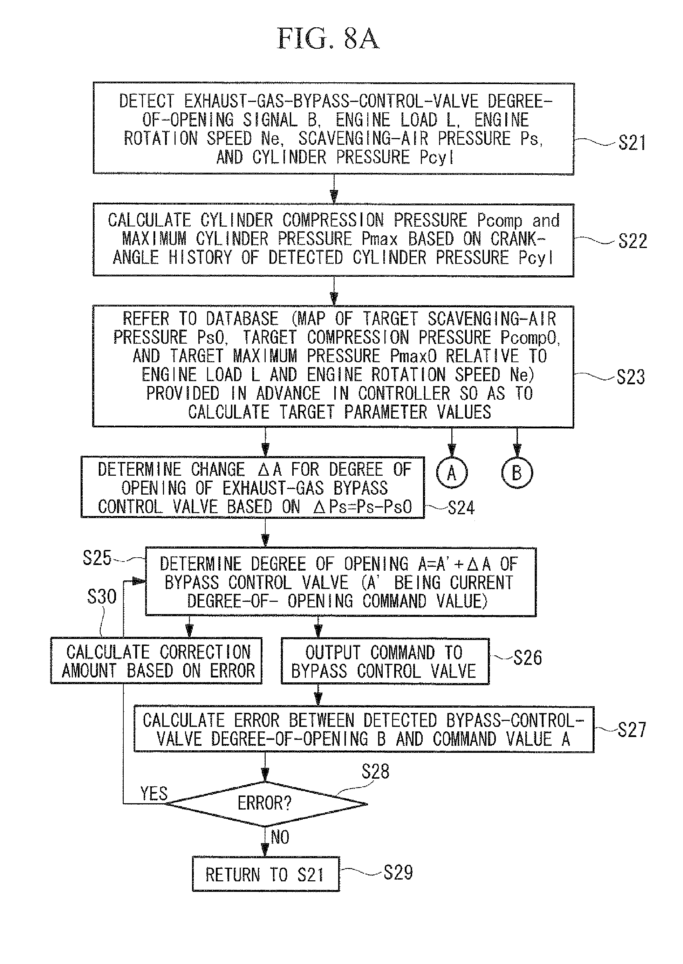

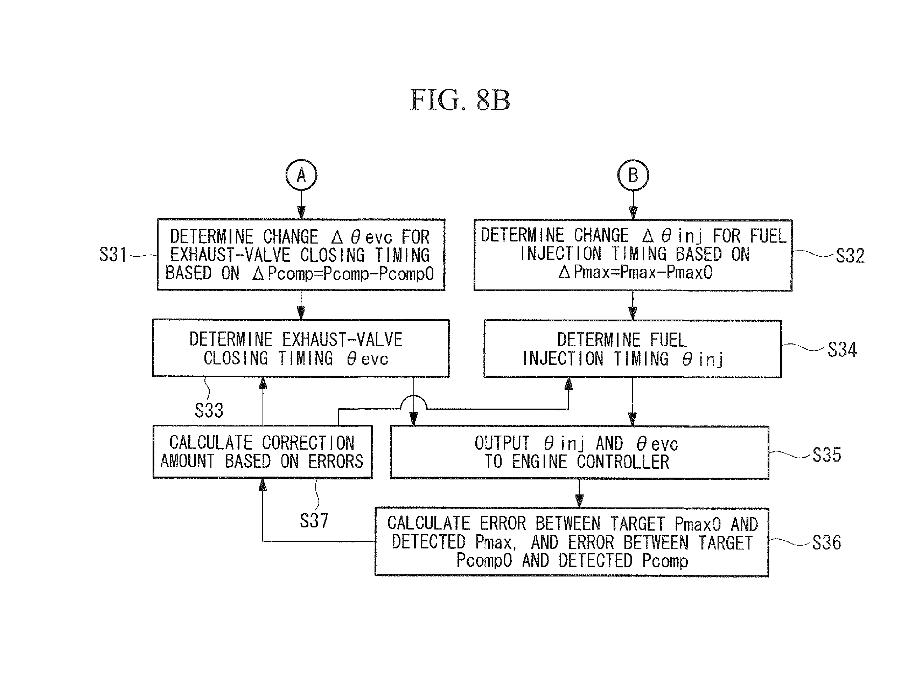

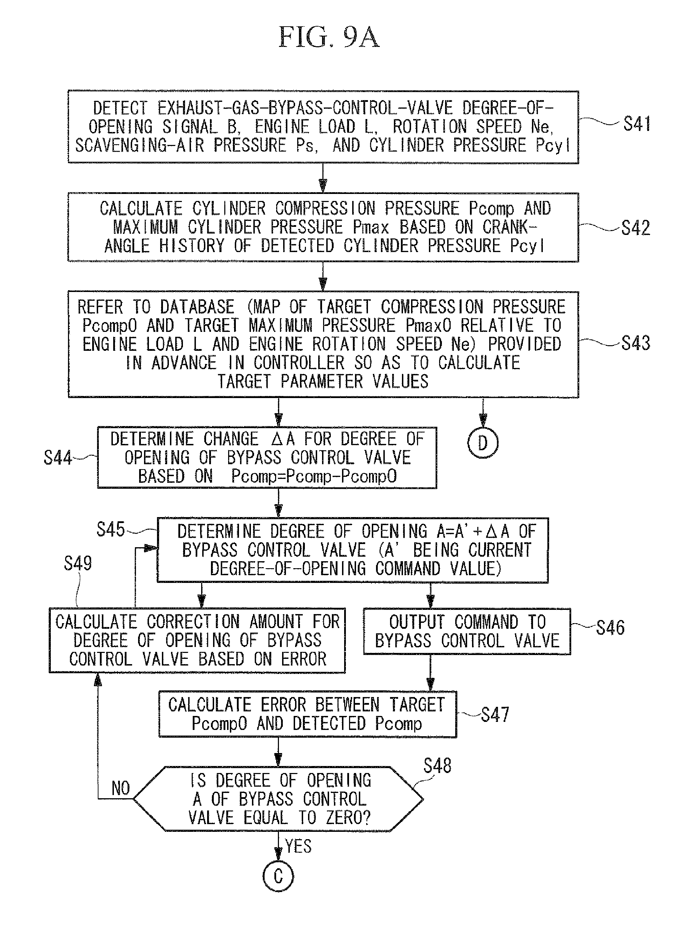

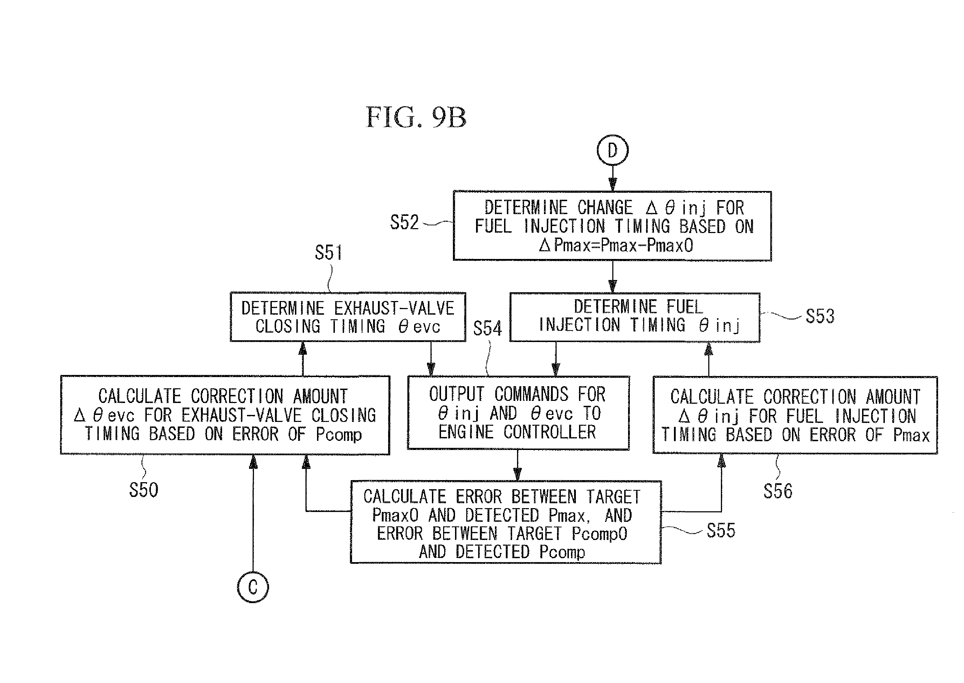

{Fig. 1} Fig. 1 schematically illustrates the configuration of a ship equipped with an engine-exhaust-gas energy recovery apparatus according to an embodiment of the present invention.
{Fig. 2} Fig. 2 illustrates a database used for setting the fuel consumption rate of an engine according to an embodiment of the present invention to a predetermined value or lower.
{Fig. 3} Fig. 3 is a control configuration diagram according to a first embodiment of the present invention.
{Fig. 4} Fig. 4 is a control flowchart according to the first embodiment of the present invention.
{Fig. 5} Fig. 5 is a control configuration diagram according to a second embodiment of the present invention.
{Fig. 6} Fig. 6 is a control flowchart according to the second embodiment of the present invention.
{Fig. 7} Fig. 7 is a control configuration diagram according to a third embodiment of the present invention.
{Fig. 8A} Fig. 8A is a control flowchart according to the third embodiment of the present invention.
{Fig. 8B} Fig. 8B is a control flowchart according to the third embodiment of the present invention.
{Fig. 9A} Fig. 9A is a control flowchart according to a fourth embodiment of the present invention.
{Fig. 9B} Fig. 9B is a control flowchart according to the fourth embodiment of the present invention.

### {Description of Embodiments}

An embodiment of a ship equipped with an engine-exhaust-gas energy recovery apparatus according to the present invention will be described below.
It should be noted that the dimensions, materials, and shapes of components described in this embodiment and the positional relationships therebetween are not particularly limited, unless otherwise noted; they are simply examples and should not limit the scope of the invention.

Fig. 1 schematically illustrates the configuration of the ship equipped with the engine-exhaust-gas energy recovery apparatus according to the present invention.
An engine-exhaust-gas energy recovery apparatus 1 and a propulsion diesel engine 2 are provided in an engine room (not shown) of the ship (not shown).
The engine-exhaust-gas energy recovery apparatus 1 includes a hybrid turbocharger 3, an exhaust-gas economizer (heat exchanger) 9, and an air cooler 18.

The propulsion diesel engine (referred to as "engine" hereinafter) 2 includes a diesel engine body (referred to as "engine body" hereinafter) 4, an exhaust manifold 7 that accumulates exhaust gas, and an intake manifold 8 that accumulates scavenging air. The propulsion diesel engine 2 is a large low-speed 2-cycle marine diesel engine.

The engine 2 includes cylinders 6 provided within the engine body 4, a fuel injection device (not shown) that injects fuel into the cylinders 6, and an exhaust valve (not shown) that exhausts, from the cylinders 6, combustion gas (referred to as "exhaust gas" hereinafter), which is generated as a result of combustion of the fuel within the cylinders 6.
Although the engine 2 in this embodiment is a six-cylinder diesel engine having six cylinders 6, it is not limited thereto. Alternatively, a power-generating diesel engine may be used in place of a propulsion diesel engine.

The hybrid turbocharger 3 includes a turbine unit 3a that is driven by the exhaust gas discharged from the exhaust manifold 7 provided in the engine body 4, a compressor unit 3b that compresses outside air by being rotationally driven by the turbine unit 3a coupled thereto via a turbine shaft 3c so as to supply scavenging air to the engine body 4, and a generator/motor unit 3d that generates electricity when the turbine shaft 3c is rotationally driven.
Although air compressed by the compressor unit 3b and supplied to the engine body 4 is referred to as "scavenging air" in this embodiment, the compressed air can alternatively be referred to as "intake air", which has the same meaning.

The generator/motor unit 3d generates electricity when the turbine shaft 3c is rotationally driven. The electric power generated by the generator/motor unit 3d is converted to a direct current via a converter 11 and is subsequently converted to an alternating current by an inverter 12. The electric power converted to an alternating current by the inverter 12 is electrically supplied to a power switchboard 14, disposed in the engine room, via a control resistor 13. The electric power generated by the generator/motor unit 3d and electrically supplied to the power switchboard 14 is used as an inboard power source.

Furthermore, the generator/motor unit 3d functions as a motor by being supplied with electric power. The generator/motor unit 3d functioning as a motor rotationally drives the turbine shaft 3c. Because the turbine shaft 3c is rotationally driven, the compressor unit 3b provided around the turbine shaft 3c is rotationally driven together therewith. Consequently, the compressor unit 3b can compress outside air so as to supply scavenging air to the engine body 4.

The exhaust-gas economizer 9 performs heat exchange between the heat of exhaust gas guided from an exhaust pipe L3, to be described later, and water fed from a feed-water pipe L5, to be described latter. The exhaust-gas economizer 9 causes the fed water to flow into a water pipe (not shown) provided within the exhaust-gas economizer 9 so as to thermally convert the fed water to steam by utilizing the heat of the exhaust gas.

The air cooler 18 is provided for cooling the scavenging air compressed by the compressor unit 3b in the hybrid turbocharger 3 so as to increase the air density. The scavenging air cooled by the air cooler 18 is supplied to the engine body 4 via an air supply pipe K2, to be described later.

An exhaust pipe L1 connects the exhaust manifold 7 of the engine 2 to the turbine unit 3a of the hybrid turbocharger 3.
A bypass pipe (bypass channel) L2 is coupled to an intermediate section of the exhaust pipe L1 or directly to the exhaust manifold 7 and connects the exhaust pipe L1 or the exhaust manifold 7 to the exhaust pipe L3, to be described later. The bypass pipe L2 allows the exhaust gas discharged from the exhaust manifold 7 to bypass the hybrid turbocharger 3.

The exhaust pipe L3 connects the turbine unit 3a of the hybrid turbocharger 3 to the exhaust-gas economizer 9. The exhaust pipe L3 allows the exhaust gas discharged from the turbine unit 3a to flow toward the exhaust-gas economizer 9.
An exhaust pipe L4 connects the exhaust-gas economizer 9 and a funnel (not shown). With the exhaust pipe L4, the exhaust gas having undergone heat exchange in the exhaust-gas economizer 9 can be released outside the ship.

An air supply pipe K₁ connects the compressor unit 3b of the hybrid turbocharger 3 to the air cooler 18.
The air supply pipe K2 connects the air cooler 18 to the intake manifold 8 of the engine 2. The air supply pipe K2 allows the scavenging air cooled by the air cooler 18 to flow toward the intake manifold 8 of the engine body 4.

The feed-water pipe L5 feeds water from a main feed-water pipe (not shown) in the ship to the exhaust-gas economizer 9.
The steam generated as a result of exchanging heat with the exhaust gas in the exhaust-gas economizer 9 is guided to a general steam pipe (not shown) provided in the ship.

An exhaust-gas bypass control valve V1 is disposed at an intermediate section of the bypass pipe L2. The exhaust-gas bypass control valve V1 controls the flow rate of the exhaust gas guided toward the hybrid turbocharger 3. Specifically, when the exhaust-gas bypass control valve V1 is fully closed, the entire flow of the exhaust gas guided through the exhaust pipe L1 is supplied to the hybrid turbocharger 3. As the degree of opening of the exhaust-gas bypass control valve V1 increases, the flow rate of the exhaust gas guided toward the bypass pipe L2 from the exhaust pipe L1 or the exhaust manifold 7 increases. Therefore, the flow rate of the exhaust gas guided toward the hybrid turbocharger 3 is controlled. The degree of opening of the exhaust-gas bypass control valve V1 is controlled by a controller (not shown).

An orifice 19 is disposed in the bypass pipe L2 at a position downstream of the exhaust-gas bypass control valve V1. When the engine body 4 is in a high-load operation mode and the exhaust-gas bypass control valve V1 is fully open, the orifice 19 prevents a large amount of exhaust gas from being guided to the bypass pipe L2 so that the exhaust gas can be supplied to the hybrid turbocharger 3.
Although the orifice 19 is provided in this embodiment, the orifice 19 does not necessarily need to be provided.

Next, the flow of the exhaust gas discharged from the engine body 4 will be described.
The exhaust gas is generated as a result of combustion of fuel supplied to the cylinders 6 provided in the engine body 4. The exhaust gas generated in the cylinders 6 is discharged from the engine body 4 when exhaust valves are open. The exhaust gas discharged from the engine body 4 is accumulated in the exhaust manifold 7. The exhaust gas accumulated in the exhaust manifold 7 is guided to the exhaust pipe L1. The exhaust gas guided to the exhaust pipe L1 is guided toward the hybrid turbocharger 3.

The turbine unit 3a is rotationally driven by the exhaust gas guided to the hybrid turbocharger 3. Because the turbine unit 3a is rotationally driven, the turbine shaft 3c is rotationally driven together therewith. With the rotational driving of the turbine shaft 3c, the compressor unit 3b compresses outside air, and the generator/motor unit 3d generates electric power. The exhaust gas that has been used for rotationally driving the turbine unit 3a in the hybrid turbocharger 3 is guided toward the exhaust pipe L3.

When the exhaust-gas bypass control valve V1 is open, a portion of the exhaust gas guided to the exhaust pipe L1 or a portion of the exhaust gas within the exhaust manifold 7 is guided toward the bypass pipe L2. The exhaust gas guided to the bypass pipe L2 flows into the exhaust pipe L3 connected to the downstream side of the hybrid turbocharger 3.

The exhaust gas guided from the hybrid turbocharger 3 and the exhaust gas guided from the bypass pipe L2 are guided toward the exhaust-gas economizer 9 via the exhaust pipe L3. The exhaust gas guided to the exhaust-gas economizer 9 is led toward the interior of the exhaust-gas economizer 9. The exhaust gas supplied to the interior of the exhaust-gas economizer 9 exchanges heat with the water flowing through the water pipe provided within the exhaust-gas economizer 9. The exhaust gas having undergone heat exchange in the exhaust-gas economizer 9 is released outside the funnel via the exhaust pipe L4.

Next, the flow of the scavenging air to be supplied to the engine body 4 will be described.
The scavenging air compressed by the compressor unit 3b in the hybrid turbocharger 3 rotationally driven by the exhaust gas is guided toward the air supply pipe K1. The scavenging air guided to the air supply pipe K1 is guided toward the air cooler 18. The scavenging air guided to the air cooler 18 is cooled so as to be increased in density before being guided toward the air supply pipe K2. The scavenging air guided to the air supply pipe K2 is supplied to the intake manifold 8. The scavenging air within the intake manifold 8 is guided into the cylinders 6 in the engine body 4.

Next, a map used for setting the fuel consumption rate of the engine body 4 to a predetermined value or lower will be described with reference to Fig. 2.
The map in Fig. 2 illustrates the relationships among fuel consumption rate, fuel injection timing, cylinder compression pressure Pcomp, and maximum cylinder pressure Pmax that correspond to a certain engine rotation speed and a certain load on the engine body 4. A database in the controller has a plurality of maps showing similar relationships for each engine rotation speed and load on the engine body 4.
The horizontal axis in Fig. 2 denotes the cylinder compression pressure Pcomp, which increases rightward in Fig. 2. The vertical axis denotes the fuel injection timing, where the upper side corresponds to the retard side and the lower side corresponds to the advance side.

The cylinder compression pressure Pcomp is known to increase with increasing scavenging-air pressure. The cylinder compression pressure Pcomp is also known to increase by advancing the closing timing of the exhaust valves provided in the engine body 4. Therefore, with regard to the horizontal axis in Fig. 2, a similar relationship can be obtained by changing the control factor to the scavenging-air pressure or the exhaust-valve closing timing in place of the cylinder compression pressure Pcomp.

Multiple curves that are separated from each other in the drawing denote contour lines each showing the fuel consumption rate of the engine body 4. The fuel consumption rate varies in terms of the position and shape of the curve depending on the engine rotation speed and the load on the engine body 4. The contour lines in the drawing show that the fuel consumption rate is better toward the lower right side of the curves (i.e., toward the center of the curves).
The thick line in the drawing denotes an upper limit of the maximum cylinder pressure Pmax. The area to the right of the upper limit of the maximum cylinder pressure Pmax is a non-usable area since it exceeds the allowable pressure in the engine body 4.

A predetermined value P of the fuel consumption rate corresponds to the area to the left of the upper limit of the maximum cylinder pressure Pmax denoted by the thick line in the drawing, as well as an area where the fuel-consumption-rate contour lines (i.e., the curves in the drawing) are in close proximity to the thick line that denotes the upper limit of the maximum cylinder pressure Pmax.
The fuel consumption rate of the engine body 4 is set to the predetermined value P or lower by controlling the scavenging-air pressure, the exhaust-valve closing timing, or the fuel injection timing.

The scavenging-air pressure decreases with decreasing load on the engine body 4. The cylinder compression pressure Pcomp decreases correspondingly. Therefore, the fuel injection timing can be advanced. Consequently, the predetermined value P of the fuel consumption rate shifts in the lower left direction along the upper limit of the maximum cylinder pressure Pmax denoted by the thick line in the map in Fig. 2 with decreasing load on the engine body 4.
In this case, the center of the curves corresponding to the fuel-consumption-rate contour lines also shifts in the lower left direction along the upper limit of the maximum cylinder pressure Pmax denoted by the thick line.
Although the map is described as being provided in the database in this embodiment, an arithmetic equation may be used in place of the map.

### {First Embodiment}

A first embodiment of a control method according to the present invention for setting the fuel consumption rate to a predetermined value or lower will now be described with reference to Figs. 3 and 4. Fig. 3 is a control configuration diagram according to this embodiment, and Fig. 4 is a control flowchart according to this embodiment.
In Fig. 3, a load signal of the engine body 4 (see Fig. 1) obtained by an engine-load detecting part 20, a rotation-speed signal of the engine body 4 obtained by an engine-rotation-speed detecting part 21, and a scavenging-air-pressure signal obtained by a scavenging-air-pressure detecting part 22 are input to a controller (control device) 23. Based on the input signals, the controller 23 outputs an exhaust-gas-bypass-control-valve control command signal A to the exhaust-gas bypass control valve V1.

As shown in Fig. 4, in step S1 signals indicating an engine load L, an engine rotation speed Ne, and a scavenging-air pressure Ps detected by the respective detecting parts 20, 21, and 22 are input to the controller 23.
In step S2, the detected engine load L and engine rotation speed Ne are checked against a database provided within the controller 23. Based on the map showing the scavenging-air pressure on the horizontal axis thereof in Fig. 2, the controller 23 calculates an optimal scavenging-air pressure PsO (referred to as "target optimal pressure" hereinafter).

In step S3, a difference ΔPs between the scavenging-air pressure Ps detected by the scavenging-air-pressure detecting part 22 and the target scavenging-air pressure PsO calculated in step S2 is obtained. The controller 23 determines a change ΔA for the degree of opening of the exhaust-gas bypass control valve V1 on the basis of this difference ΔPs.

In step S4, a new exhaust-gas-bypass-control-valve control command signal A for the exhaust-gas bypass control valve V1 is determined from the change ΔA for the degree of opening of the exhaust-gas bypass control valve V1 determined in step S3 and a current degree-of-opening command value A' of the exhaust-gas bypass control valve V1.
In step S5, the controller 23 outputs a command to the exhaust-gas bypass control valve V1 so as perform control on the basis of the new exhaust-gas-bypass-control-valve control command signal A.

Subsequently, the process returns to step S1 from step S5 so as to be repeated.
While repeating this process, if the scavenging-air pressure Ps detected by the scavenging-air-pressure detecting part 22 deviates from the target scavenging-air pressure PsO, the scavenging-air pressure Ps is corrected. Consequently, the fuel consumption rate of the engine body 4 can be set to the predetermined value P or lower.

As described above, the engine-exhaust-gas energy recovery apparatus according to this embodiment and the ship equipped with the same achieve the following advantages.
Because the exhaust-gas bypass control valve V1 is controlled by the controller (control device) 23, the flow rate of exhaust gas guided toward the hybrid turbocharger 3 can be controlled. Moreover, based on the engine load L detected by the engine-load detecting part 20 and the engine rotation speed Ne detected by the engine-rotation-speed detecting part 21, the controller 23 calculates the target scavenging-air pressure PsO by using the map in the database provided within the controller 23. Thus, the pressure of scavenging air, that is, the scavenging-air pressure Ps, to be guided to the engine body 4 from the compressor unit 3b in the hybrid turbocharger 3 can be controlled toward the target scavenging-air pressure PsO. Consequently, the fuel consumption rate of the engine body 4 can be suppressed to the predetermined value P or lower by controlling the exhaust-gas bypass control valve V1, thereby reducing the operating costs of the engine 2.

The scavenging-air pressure Ps is controlled by controlling the exhaust-gas bypass control valve V1. Therefore, the fuel combustion state in the engine body 4 can be improved. Consequently, by controlling the exhaust-gas bypass control valve V1, the fuel consumption rate of the engine body 4 can be improved.

Furthermore, because the hybrid turbocharger 3 that generates electricity by using exhaust gas is provided, when the engine 2 starts to operate, the hybrid turbocharger 3 is driven by electric power supplied to the generator/motor unit 3d so that air can be supplied to the engine body 4.
Moreover, when the engine 2 is running, the flow rate of exhaust gas guided toward the hybrid turbocharger 3 can be changed by controlling the exhaust-gas bypass control valve V1 Consequently, by controlling the exhaust-gas bypass control valve V1, the amount of electricity to be generated in the hybrid turbocharger 3 can be controlled in accordance with the amount of electricity required.

The exhaust gas whose flow rate is controlled by the exhaust-gas bypass control valve V1 is guided to the hybrid turbocharger 3. Moreover, the exhaust gas that has traveled through the bypass pipe (bypass channel) L2 and the hybrid turbocharger 3 is guided toward the exhaust-gas economizer (heat exchanger) 9. Therefore, when the exhaust-gas bypass control valve V1 is opened so as to reduce the amount of electricity generated in the hybrid turbocharger 3, a large amount of high-temperature exhaust gas guided from the bypass pipe L2 is supplied to the exhaust-gas economizer 9. Consequently, by controlling the exhaust-gas bypass control valve V1, the amount of electricity to be generated in the hybrid turbocharger 3 can be controlled, while thermal energy of the exhaust gas can be effectively recovered.

The engine-exhaust-gas energy recovery apparatus 1 installed in a ship allows for reduced operating costs of the engine 2. Therefore, the operating costs of the ship can be reduced.

### {Second Embodiment}

Next, a second embodiment of a control method according to the present invention for setting the fuel consumption rate to a predetermined value or lower will be described with reference to Figs. 5 and 6. The first and second embodiments correspond to a case where control is performed on the basis of the scavenging-air pressure detected by the scavenging-air-pressure detecting part without measuring the cylinder pressure. On the other hand, third and fourth embodiments, to be described later, correspond to a case where control is performed by measuring the cylinder pressure.
Fig. 5 is a control configuration diagram according to this embodiment, and Fig. 6 is a control flowchart according to this embodiment.

In Fig. 5, components, the flow of exhaust gas, the flow of air, and a control method that are similar to those in the first embodiment are given the same reference numerals or characters. The control method differs from that in the first embodiment in that an exhaust-gas-bypass-control-valve degree-of-opening signal (referred to as "degree-of-opening signal" hereinafter) B from an exhaust-gas-bypass-control-valve degree-of-opening detecting part 26 is input to a controller 24, and the controller 24 outputs a fuel injection timing signal θinj, an exhaust-valve closing timing signal θevc, and a working-oil accumulation pressure signal or a fuel-oil accumulation pressure signal to an engine controller 25.

The term "working-oil accumulation pressure signal" refers to an accumulation pressure of working oil, used for activating a fuel pump (not shown) connected to the fuel injection device, in an electronically-controlled diesel engine (not shown) that performs control of the working oil on the basis of an electric signal.
The term "fuel-oil accumulation pressure signal" refers to an accumulation pressure of fuel oil accumulated in a common rail in an electronically-controlled diesel engine that uses a common-rail fuel injection valve (not shown) connected to the fuel injection device.

In step S11 in the flowchart shown in Fig. 6, the degree-of-opening signal B from the exhaust-gas-bypass-control-valve degree-of-opening detecting part 26, and signals indicating an engine load L, an engine rotation speed Ne, and a scavenging-air pressure Ps detected by the respective detecting parts 20, 21, and 22 are input to the controller (control device) 24.

The process proceeds to step S12 for referring to a map that shows the relationships of the scavenging-air pressure Ps, the fuel injection timing, the exhaust-valve closing timing, and the working-oil accumulation pressure or the fuel-oil accumulation pressure relative to the detected engine load L and engine rotation speed Ne. Based on the map referred to, the controller 24 calculates a target scavenging-air pressure PsO, a target fuel injection timing θing, a target exhaust-valve closing timing θevc, and a target working-oil accumulation pressure or a target fuel-oil accumulation pressure (i.e., optimal parameter values).

In this case, the map provided within the controller 24 shows the fuel-consumption-rate contour lines and the upper limit of the maximum cylinder pressure Pmax within a coordinate system, as shown in Fig. 2, formed by the cylinder compression pressure Pcomp and the fuel injection timing, relative to the engine load L and the engine rotation speed Ne, and indicates that the fuel consumption rate can be set to the predetermined value P or lower.

The horizontal axis in Fig. 2 may denote the scavenging-air pressure, the exhaust-valve closing timing, the working-oil accumulation pressure, or the fuel-oil accumulation pressure in place of the cylinder compression pressure Pcomp. Even in that case, the target scavenging-air pressure PsO, the target fuel injection timing θinj, the target exhaust-valve closing timing θevc, and the target working-oil accumulation pressure or the target fuel-oil accumulation pressure can be similarly calculated on the basis of the map.

In step S13, a difference ΔPs between a scavenging-air pressure Ps detected by the scavenging-air-pressure detecting part 22 and the target scavenging-air pressure PsO calculated in step S12 is obtained. The controller 24 determines a change ΔA for the degree of opening of the exhaust-gas bypass control valve V1 on the basis of this difference ΔPs.

In step S14, a new exhaust-gas-bypass-control-valve control command signal A for the exhaust-gas bypass control valve V1 is determined from the change ΔA for the degree of opening of the exhaust-gas bypass control valve V1 determined in step S13 and a current degree-of-opening command value A' of the exhaust-gas bypass control valve V1.

In step S15, the controller 24 outputs the new exhaust-gas-bypass-control-valve control command signal A to the exhaust-gas bypass control valve V1.
In step S16, an error between a new detected degree-of-opening signal B of the exhaust-gas bypass control valve V1 and the new exhaust-gas-bypass-control-valve control command signal A is calculated.

If there is an error between the degree-of-opening signal B and the new exhaust-gas-bypass-control-valve control command signal A, a correction amount is calculated in step S17 on the basis of the error, and the process returns to step S14 so as to repeat the steps for correcting the degree of opening of the exhaust-gas bypass control valve V1.
If the degree-of-opening signal B and the new exhaust-gas-bypass-control-valve control command signal A are the same, the process returns to step S11 so as to repeat control for maintaining the scavenging-air pressure Ps at the target scavenging-air pressure PsO.

On the other hand, in step S18, the signals indicating the target fuel injection timing θinj, the target exhaust-valve closing timing θevc, and the target working-oil accumulation pressure or the target fuel-oil accumulation pressure obtained from the map are transmitted to the engine controller 25. Thus, the engine controller 25 performs control of the engine body 4 (see Fig. 1).

As described above, the engine-exhaust-gas energy recovery apparatus according to this embodiment and the ship equipped with the same achieve the following advantages.
The controller (control device) 24 calculates the target fuel injection timing θinj by using the map on the basis of the engine load L and the engine rotation speed Ne so as to control the fuel injection timing. Therefore, the scavenging-air pressure Ps is controlled toward the target scavenging-air pressure PsO so that the fuel combustion state within the cylinders 6 is improved, thereby allowing for increased thermal efficiency. Consequently, by controlling the exhaust-gas bypass control valve V1 and the fuel injection timing, the fuel consumption rate of the engine body 4 can be set closer to the predetermined value P or lower.

Furthermore, the controller 24 calculates the target exhaust-valve closing timing θevc by using the map on the basis of the engine load L and the engine rotation speed Ne so as to control the exhaust-valve closing timing. Therefore, the cylinder pressure can be controlled so that the fuel combustion state within the cylinders 6 is improved, thereby allowing for increased thermal efficiency. Consequently, by controlling the exhaust-gas bypass control valve V1 and the exhaust-valve closing timing, the fuel consumption rate of the engine body 4 can be set even closer to the predetermined value P or lower.

Furthermore, if the exhaust-valve closing timing is retarded, the work of compression is reduced when the pistons move upward. Therefore, the temperature of combustion gas at the top dead center within each cylinder 6 decreases. Consequently, by controlling the exhaust-valve closing timing, the generation of NOx can be suppressed, thereby achieving reduced environmental load.

Furthermore, the controller 24 calculates the target working-oil accumulation pressure or the target fuel-oil accumulation pressure by using the map on the basis of the engine load L and the engine rotation speed Ne. Moreover, the controller 24 controls the working-oil accumulation pressure or the fuel-oil accumulation pressure. Therefore, by controlling the working-oil accumulation pressure or the fuel-oil accumulation pressure, the fuel injection timing and the fuel injection pressure can be controlled, so that the control of the exhaust-gas bypass control valve V1 and the fuel combustion state within the cylinders 6 can be improved, thereby allowing for increased thermal efficiency. Consequently, the fuel consumption rate of the engine body 4 can be set even closer to the predetermined value P or lower.

Furthermore, as shown in steps S14 to S17 in Fig. 6, feedback control is performed by successively detecting the degree of opening of the exhaust-gas bypass control valve V1 using the exhaust-gas-bypass-control-valve degree-of-opening detecting part 26. Therefore, an error (deviation), caused by degradation over time, occurring between the degree-of-opening signal (actual degree of opening) B obtained by the exhaust-gas-bypass-control-valve degree-of-opening detecting part 26 and the exhaust-gas-bypass-control-valve control command signal (commanded degree of opening) A can be corrected. Consequently, the fuel consumption rate of the engine body 4 can be maintained at the predetermined value P or lower.

### {Third Embodiment}

Next, a third embodiment of a control method according to the present invention for setting the fuel consumption rate to a predetermined value or lower will be described with reference to Figs. 7, 8A, and 8B. Fig. 7 is a control configuration diagram according to this embodiment, and Figs. 8A and 8B illustrate a control flowchart according to this embodiment.
In Figs. 7, 8A, and 8B, components, the flow of exhaust gas, the flow of air, and a control method that are similar to those in the second embodiment are given the same reference numerals or characters. The control method differs from that in the second embodiment in that a cylinder pressure signal obtained by a cylinder-pressure detecting part 27 is input to a controller 28.

In step S21 in the flowchart shown in Figs. 8A and 8B, an exhaust-gas-bypass-control-valve degree-of-opening signal B obtained by the exhaust-gas-bypass-control-valve degree-of-opening detecting part 26 and an engine load L, an engine rotation speed Ne, a scavenging-air pressure Ps, and a cylinder pressure Pcyl detected by the respective detecting parts 20, 21, 22, and 27 are input to the controller 28.
In step S22, a cylinder compression pressure Pcomp, which is a pressure prior to ignition of fuel, and a maximum cylinder pressure Pmax are calculated on the basis of a crank-angle history with respect to the detected cylinder pressure Pcyl.

In step S23, the controller 28 checks the detected engine load L and engine rotation speed Ne against a database provided within the controller 28. The controller 28 calculates a target scavenging-air pressure PsO, a target cylinder compression pressure PcompO, and a target maximum cylinder pressure PmaxO on the basis of a map.

In step 524, a difference ΔPs between a scavenging-air pressure Ps detected by the scavenging-air-pressure detecting part 22 and the target scavenging-air pressure PsO calculated in step S23 is obtained. The controller 28 determines a change ΔA for the degree of opening of the exhaust-gas bypass control valve V1 on the basis of this difference ΔPs.

In step S25, the controller 28 determines a new exhaust-gas-bypass-control-valve control command A for the exhaust-gas bypass control valve V1 from the change ΔA for the degree of opening of the exhaust-gas bypass control valve V1 determined in step S24 and a current degree-of-opening command value A'.

In step S26, the controller 28 outputs the new exhaust-gas-bypass-control-valve control command A to the exhaust-gas bypass control valve V1.
In step S27, an error between the detected exhaust-gas-bypass-control-valve degree-of-opening signal B of the exhaust-gas bypass control valve V1 and the new exhaust-gas-bypass-control-valve control command A is calculated.

In step S28, it is determined whether or not there is an error between the detected exhaust-gas-bypass-control-valve degree-of-opening signal B of the exhaust-gas bypass control valve V1 and the new exhaust-gas-bypass-control-valve control command A. If there is an error, the process proceeds to step S30 where a correction amount is calculated on the basis of the error, and returns to step S25 so as to repeat the steps for correcting the degree of opening of the exhaust-gas bypass control valve V1.
In step S28, if the detected degree-of-opening signal B of the exhaust-gas bypass control valve V1 and the new exhaust-gas-bypass-control-valve control command A are the same, the process returns to step S21 via step S29 so as to repeat control for setting the scavenging-air pressure Ps equal to the target scavenging-air pressure PsO.

On the other hand, in step S31, the controller 28 determines a change Δθevc for the exhaust-valve closing timing on the basis of a difference APcomp between the cylinder compression pressure Pcomp calculated in step S22 and the target cylinder compression pressure PcompO calculated in step S23.
In step S32, a change Δθinj for the fuel injection timing is determined on the basis of a difference ΔPmax between the target maximum cylinder pressure PmaxO calculated in step S23 and the maximum cylinder pressure Pmax calculated in step S22 simultaneously with step S31.

In step S33, the controller 28 determines an exhaust-valve closing timing θevc on the basis of the change Δθevc for the exhaust-valve closing timing determined in step S31.
In step S34, the controller 28 determines a fuel injection timing θinj on the basis of the change Δθinj for the fuel injection timing determined in step S32.

In step S35, the controller 28 outputs commands for the exhaust-valve closing timing θevc determined in step S33 and the fuel injection timing θinj determined in step S34 to the engine controller 25.
In step S36, an error between the target maximum cylinder pressure PmaxO and the detected maximum cylinder pressure Pmax, and an error between the target cylinder compression pressure PcompO and the detected cylinder compression pressure Pcomp are calculated.

In step S37, if there are errors between the target maximum cylinder pressure PmaxO and the detected maximum cylinder pressure Pmax and between the target cylinder compression pressure PcompO and the detected cylinder compression pressure Pcomp, a correction amount is calculated on the basis of the errors. The controller 28 repeats the control by feeding back the calculated correction amount to step S33 and step 534.

As described above, the engine-exhaust-gas energy recovery apparatus according to this embodiment and the ship equipped with the same achieve the following advantages.
The controller (control device) 28 obtains the target cylinder compression pressure PcompO and the target maximum cylinder pressure PmaxO from the map by using the cylinder pressure Pcyl detected by the cylinder-pressure detecting part 27. Furthermore, the controller 28 controls the exhaust-gas bypass control valve V1, the fuel injection timing, and the exhaust-valve closing timing. Therefore, by controlling the exhaust-gas bypass control valve, the exhaust-valve closing timing, and the fuel injection timing, the cylinder compression pressure Pcomp and the maximum cylinder pressure Pmax can be set equal to the target cylinder compression pressure PcompO and the target maximum cylinder pressure PmaxO, respectively, so that the fuel combustion state within the cylinders 6 is improved, thereby allowing for increased thermal efficiency. Consequently, the fuel consumption rate of the engine body 4 can be set to the predetermined value P or lower even when the properties of the fuel change.

### {Fourth Embodiment}

Next, a fourth embodiment of a control method according to the present invention for setting the fuel consumption rate to a predetermined value or lower will be described with reference to Figs. 7, 9A, and 9B. Fig. 7 is a control configuration diagram according to this embodiment, and is the same as that in the third embodiment. Figs. 9A and 9B illustrate a control flowchart according to this embodiment.

In step S41 in the flowchart shown in Figs. 9A and 9B, an exhaust-gas-bypass-control-valve degree-of-opening signal B obtained by the exhaust-gas-bypass-control-valve degree-of-opening detecting part 26 and an engine load L, an engine rotation speed Ne, a scavenging-air pressure Ps, and a cylinder pressure Pcyl detected by the respective detecting parts 20, 21, 22, and 27 are input to a controller 29.
In step S42, the controller 29 calculates a cylinder compression pressure Pcomp and a maximum cylinder pressure Pmax on the basis of a crank-angle history of the detected cylinder pressure Pcyl.

In step S43, the detected engine load L and engine rotation speed Ne are checked against a database provided within the controller 29. The controller 29 calculates a target cylinder compression pressure PcompO and a target maximum cylinder pressure PmaxO on the basis of a map in the database.

In step S44, the controller 29 obtains a difference ΔPcomp between the cylinder compression pressure Pcomp and the target cylinder compression pressure PcompO. The controller 29 determines a change ΔA for the degree of opening of the exhaust-gas bypass control valve V1 on the basis of this difference ΔPcomp.

In step S45, a new exhaust-gas-bypass-control-valve control command A for the exhaust-gas bypass control valve V1 is determined from the change ΔA for the degree of opening of the exhaust-gas bypass control valve V1 determined in step S44 and a current degree-of-opening command value A'.
In step S46, the new exhaust-gas-bypass-control-valve control command A determined in step S45 is output to the exhaust-gas bypass control valve V1

In step S47, an error between the target cylinder compression pressure PcompO and the detected cylinder compression pressure Pcomp is calculated.
In step S48, it is determined whether the degree of opening of the exhaust-gas bypass control valve V1 is equal to zero. If the degree of opening of the exhaust-gas bypass control valve V1 is not equal to zero (A#0), that is, if the exhaust-gas bypass control valve V1 is open, the process proceeds to step S49.
In step S49, a correction amount for the degree of opening of the exhaust-gas bypass control valve V1 is calculated on the basis of the error between the target cylinder compression pressure PcompO and the detected cylinder compression pressure Pcomp. Subsequently, the result is reflected in step S45 so as to control the degree of opening of the exhaust-gas bypass control valve V1.

On the other hand, if the degree of opening of the exhaust-gas bypass control valve V1 is equal to zero (A=0) in step S48, that is, if the exhaust-gas bypass control valve V1 is closed, the process proceeds to step S50.
In step S50, a correction amount Δθevc for the exhaust-valve closing timing is calculated on the basis of the error between the target cylinder compression pressure PcompO calculated in step S47 and the detected cylinder compression pressure Pcomp. Subsequently, the process proceeds to step S51 where the exhaust-valve closing timing is determined.

In step S52, a difference ΔPmax between the maximum cylinder pressure Pmax calculated in step S42 and the target maximum cylinder pressure PmaxO calculated in step S43 is calculated. Moreover, in step S52, a change Δθinj for the fuel injection timing is determined on the basis of the calculated difference ΔPmax.
In step S53, the controller 29 determines the fuel injection timing on the basis of the change Δθinj for the fuel injection timing determined in step S52.

In step S54, control commands for the exhaust-valve closing timing θevc determined in step S51 and the fuel injection timing θinj determined in step S53 are output to the engine controller 25.

In step S55, an error between the target maximum cylinder pressure PmaxO and the maximum cylinder pressure Pmax and an error between the target cylinder compression pressure PcompO and the maximum cylinder pressure Pmax are calculated. If there is an error between the maximum cylinder pressure Pmax and the target maximum cylinder pressure PmaxO, the process proceeds to step S56.

In step S56, a correction amount for the fuel injection timing is calculated on the basis of the error, calculated in step S55, between the target cylinder compression pressure PcompO and the maximum cylinder pressure Pmax.
Subsequently, the process proceeds to step S53 where a new fuel injection timing θinj is determined on the basis of the correction amount for the fuel injection timing calculated in step S56, and a control command for the new fuel injection timing θinj is output to the engine controller 25.

On the other hand, in step S55, if there is an error between the cylinder compression pressure Pcomp and the target cylinder compression pressure PcompO, the process proceeds to step S50.
In step S50, a correction amount Δθevc for the exhaust-valve closing timing is calculated on the basis of the error between the cylinder compression pressure Pcomp and the target cylinder compression pressure PcompO.
Subsequently, the process proceeds to step S51 where a new exhaust-valve closing timing θevc is determined on the basis of the correction amount Δθevc for the exhaust-valve closing timing calculated in step S50, and a control command for the new exhaust-valve closing timing θevc is output to the engine controller 25.

As described above, the engine-exhaust-gas energy recovery apparatus according to this embodiment and the ship equipped with the same achieve the following advantages.
The target cylinder compression pressure PcompO and the target maximum cylinder pressure PmaxO are calculated from the engine load L and the engine rotation speed Ne. Furthermore, the cylinder pressure Pcyl is detected so as to control the exhaust-valve closing timing and the fuel injection timing. Therefore, by controlling the exhaust-gas bypass control valve V1, the exhaust-valve closing timing, and the fuel injection timing, the cylinder compression pressure Pcomp and the maximum cylinder pressure Pmax can be set equal to the target cylinder compression pressure PcompO and the target maximum cylinder pressure PmaxO, respectively, so that the fuel combustion state within the cylinders 6 is improved, thereby allowing for increased thermal efficiency. Consequently, the fuel consumption rate of the engine body 4 can be set to the predetermined value P or lower even when the properties of the fuel change.

Furthermore, because the cylinder pressure Pcyl is detected so as to control the exhaust-valve closing timing, even when the exhaust-gas bypass control valve V1 is fully closed, the exhaust-valve closing timing is controlled so that the target cylinder compression pressure PcompO can be controlled. Consequently, even when there is a problem in controlling the exhaust-gas bypass control valve V1, the fuel consumption rate of the engine body 4 can still be set to the predetermined value P or lower.

The present invention is not to be limited to the above embodiments, and modifications and alterations are permissible, where appropriate, so long as they do not depart from the technical scope of the invention.

Although the engine-exhaust-gas energy recovery apparatus 1 according to each embodiment is described as being provided in a ship, the present invention is not limited to this; for example, the engine-exhaust-gas energy recovery apparatus 1 may be provided in a land-based power plant. In that case, the following advantages are achieved.
The engine-exhaust-gas energy recovery apparatus 1 provided in a power plant allows for reduced operating costs of the engine 2. Therefore, the operating costs of the power plant can be reduced. In addition, an environmentally friendly power plant can be achieved.

Furthermore, although the engine-exhaust-gas energy recovery apparatus 1 described in each of the above embodiments is equipped with a single hybrid turbocharger 3 as a specific example, the present invention is not limited to this and can be applied to, for example, a type equipped with two hybrid turbochargers 3.

Furthermore, in each embodiment of the present invention, the operation of the hybrid turbocharger 3 may be adjusted in a stepless manner by finely adjusting the exhaust-gas bypass control valve V1 so as to increase the adjustable range for the amount of electricity to be generated by the generator/motor unit 3d. Therefore, even when power consumption in the ship changes significantly, the control resistor 13 used can have a small capacity and can be made compact, which is advantageous in terms of costs.

### {Reference Signs List}

- 1: engine-exhaust-gas energy recovery apparatus
- 2: marine diesel engine (engine)
- 3: hybrid turbocharger
- 3a: turbine unit
- 3b: compressor unit
- 3d: generator/motor unit
- L2: bypass pipe (bypass channel)
- V1: exhaust-gas bypass control valve

## Claims

1. An engine-exhaust-gas energy recovery apparatus comprising:
a hybrid turbocharger having a turbine unit that is driven by exhaust gas discharged from an engine, a compressor unit that is driven by the turbine unit so as to pressure-feed outside air to the engine, and a generator/motor unit that generates electricity when the turbine unit is driven and that also drives the turbine unit by being supplied with electric power;
a bypass channel that allows the exhaust gas supplied toward the hybrid turbocharger to bypass the hybrid turbocharger;
an exhaust-gas bypass control valve that is provided in the bypass channel and that controls the flow rate of the exhaust gas guided toward the hybrid turbocharger;
an engine-load detecting part for detecting a load on the engine;
an engine-rotation-speed detecting part for detecting a rotation speed of the engine;
a scavenging-air-pressure detecting part for detecting a scavenging-air pressure of the engine; and
a control device that has a database for calculating a target scavenging-air pressure at which a fuel consumption rate of the engine becomes lower than or equal to a predetermined value, the target scavenging-air pressure being calculated from the load and the rotation speed respectively detected by the engine-load detecting part and the engine-rotation-speed detecting part,
wherein the control device controls the exhaust-gas bypass control valve so as to achieve the target scavenging-air pressure.

2. The engine-exhaust-gas energy recovery apparatus according to Claim 1, further comprising a heat exchanger that performs heat exchange between the exhaust gas guided from the hybrid turbocharger and the exhaust gas guided from the bypass channel.

3. The engine-exhaust-gas energy recovery apparatus according to Claim 1 or 2, wherein the control device includes a map or an arithmetic equation for calculating a target fuel injection timing at which the fuel consumption rate of the engine becomes lower than or equal to the predetermined value, the target fuel injection timing being calculated from the load and the rotation speed respectively detected by the engine-load detecting part and the engine-rotation-speed detecting part, and wherein the control device controls the fuel injection timing by using the map or the arithmetic equation.

4. The engine-exhaust-gas energy recovery apparatus according to any one of Claims 1 to 3, wherein the control device includes a map or an arithmetic equation for calculating a target exhaust-valve closing timing at which the fuel consumption rate of the engine becomes lower than or equal to the predetermined value, the target exhaust-valve closing timing being calculated from the load and the rotation speed respectively detected by the engine-load detecting part and the engine-rotation-speed detecting part, and wherein the control device controls the exhaust-valve closing timing by using the map or the arithmetic equation.

5. The engine-exhaust-gas energy recovery apparatus according to any one of Claims 1 to 4, wherein the engine includes a working-oil accumulator that accumulates working oil that drives a fuel pump, or a fuel accumulator that accumulates fuel oil to be supplied to a common-rail fuel injection valve, and
wherein the control device includes a map or an arithmetic equation for calculating a target working-oil accumulation pressure or a target fuel accumulation pressure at which the fuel consumption rate of the engine becomes lower than or equal to the predetermined value, the target working-oil accumulation pressure or the target fuel accumulation pressure being calculated from the load and the rotation speed respectively detected by the engine-load detecting part and the engine-rotation-speed detecting part, and wherein the control device controls the working-oil accumulation pressure or the fuel accumulation pressure by using the map or the arithmetic equation.

6. The engine-exhaust-gas energy recovery apparatus according to any one of Claims 1 to 5, wherein the control device calculates a target degree of opening, at which the fuel consumption rate of the engine becomes lower than or equal to the predetermined value, of the exhaust-gas bypass control valve, the target degree of opening being calculated on the basis of a signal from an exhaust-gas-bypass-control-valve degree-of-opening detecting part for detecting the degree of opening of the exhaust-gas bypass control valve, and wherein the control device performs feedback control so that the exhaust-gas bypass control valve is set to the target degree of opening.

7. The engine-exhaust-gas energy recovery apparatus according to any one of Claims 1 to 5, wherein the control device calculates a cylinder compression pressure Pcomp and a maximum cylinder pressure Pmax from a cylinder pressure detected by a cylinder-pressure detecting part and uses a map or an arithmetic equation to calculate a target cylinder compression pressure PcompO and a target maximum cylinder pressure PmaxO, at which the fuel consumption rate of the engine becomes lower than or equal to the predetermined value, relative to the detected load and the detected rotation speed, and wherein the control device controls the fuel injection timing and the exhaust-valve closing timing so that the maximum cylinder pressure Pmax becomes equal to the target maximum cylinder pressure PmaxO and the cylinder compression pressure Pcomp becomes equal to the target cylinder compression pressure PcompO.

8. An engine-exhaust-gas energy recovery apparatus comprising:
a hybrid turbocharger having a turbine unit that is driven by exhaust gas discharged from an engine, a compressor unit that is driven by the turbine unit so as to pressure-feed outside air to the engine, and a generator/motor unit that generates electricity when the turbine unit is driven and that also drives the turbine unit by being supplied with electric power;
a bypass channel that allows the exhaust gas supplied toward the hybrid turbocharger to bypass the hybrid turbocharger;
an exhaust-gas bypass control valve that is provided in the bypass channel and that controls the flow rate of the exhaust gas guided toward the hybrid turbocharger;
an engine-load detecting part for detecting a load on the engine;
an engine-rotation-speed detecting part for detecting a rotation speed of the engine;
a scavenging-air-pressure detecting part for detecting a scavenging-air pressure of the engine;
a cylinder-pressure detecting part for detecting a cylinder pressure of the engine; and
a control device that has a database for calculating a target cylinder compression pressure PcompO and a target maximum cylinder pressure PmaxO at which a fuel consumption rate of the engine becomes lower than or equal to a predetermined value, the target cylinder compression pressure PcompO and the target maximum cylinder pressure PmaxO being calculated from the load and the rotation speed respectively detected by the engine-load detecting part and the engine-rotation-speed detecting part,
wherein the control device controls an exhaust-valve closing timing so as to achieve the target cylinder compression pressure PcompO, and controls a fuel injection timing so as to achieve the target maximum cylinder pressure PmaxO.

9. A ship comprising the engine-exhaust-gas energy recovery apparatus according to any one of Claims 1 to 8.

10. A power plant comprising the engine-exhaust-gas energy recovery apparatus according to any one of Claims 1 to 8.
